# EUROPEAN PATENT SPECIFICATION

(11) **EP 1 408 300 B1**
(45) Date of publication and mention of the grant of the patent: **21.05.2008**
(21) Application number: 03006886.0
(22) Date of filing: 31.03.2003
(51) Int. Cl.: G01B 3/10

(54) **Elastomer-covered tape measure end-hook**
Elastomerüberzogener Massband-Endhaken
Crochet pour bande de mesure revêtu d'un élastomère

(30) Priority: 10.10.2002 CN 02257279
(43) Date of publication of application: 14.04.2004
(73) Proprietor: First Measure Ind Co., Ltd., San Hsia Town Taipei Hsien (TW)
(72) Inventor: Liu, Yu-Chun, San Hsia Town Taipei Hsien (TW)
(74) Representative: Winkler, Andreas Fritz Ernst

(56) References cited:
- EP-A- 1 050 737
- WO-A-00/33017
- US-A- 5 600 894
- PATENT ABSTRACTS OF JAPAN vol. 018, no. 450 (P-1790), 22 August 1994 (1994-08-22) & JP 06 147802 A (SEKISUI JUSHI CO LTD), 27 May 1994 (1994-05-27)

## Description

### Field of the Invention

The present invention relates to measure tapes, and particularly to a soft stop-proof hook head of a measure tape, in that the hook head has a ruler hook, the ruler hook is enclosed by a soft elastomer so as to present a preferred slide-stop effect.

### Background of the Invention

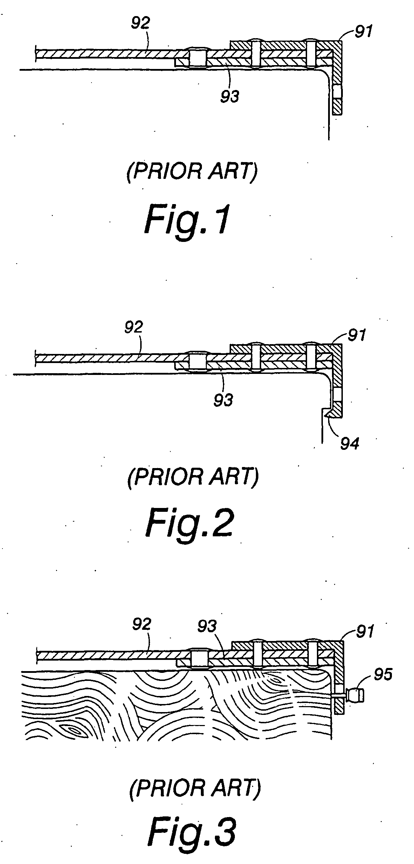

Referring to Fig. 1, it is illustrated that a prior art ruler 92 of a measure tape is made as a long metal thin piece, for example, a steel strip by cold rolling. A distal end of the ruler is riveted with an L shape ruler hook 91 for hooking a measured bench/mark of an object to be measured. To enhance the stability of the ruler hook 92, a pad 93 is added at a bottom of the ruler.

In measuring, in general, the ruler hook is hung upon the measured bench mark of an object having a right angle on the shape of the object. When the object to be measured has an inclined slope, a cambered section, or a spherical surface, such as a round tube, a round edge, a round corner, a ball, etc., the ruler hook 91 is easily to slide out. When the ruler vibrates, the ruler hook very possibly slides out so that the measurement is stopped. When the measured bench mark is at a smooth surface, the ruler hook is easy to slide thereon so that the measurement is difficult. Therefore, to improve this problem, as shown in the Fig. 2, a distal end of the ruler hook is added with a small hook 94 or a positioning nail 95 is used to fix the ruler hook.

However, above way is used in finite cases. For example, the ruler hook 91 with a small hook 94 is only used to a recessed measured bench mark. The positioning nail 95 is only used for a wood material. Moreover, the above mentioned ways are only used in some special cases, but most of the conditions are not suitable by the prior art ways.

EP 1 050 737 discloses a tape measure with an outer coating, in particular having a friction member rigidly fixed to a clip portion of the tape measure.

### Summary of the Invention

Accordingly, the primary object of the present invention is to provide a soft stop-proof hook head of a measure tape, the hook head being located at one end of the measure tape and comprising a ruler hook. A surface of a ruler hook is enclosed by a soft elastomer. The soft elastomer is made of a flexible material. When the soft elastomer is pressed, it generates an elastic resistance. In measuring, the ruler hook is coupled to a measured bench mark of an object to be measured with a slide-stop effect. Moreover, the soft elastomer is extended with a slide piece for enhancing the slide-stop effect.

The various objects and advantages of the present invention will be more readily understood from the following detailed description when read in conjunction with the appended drawing.

### Brief description of the Drawings

Fig. 1 is a schematic view showing a ruler hook of a prior art measure tape.
Fig. 2 is a schematic view showing that a ruler hook of a prior art measure tape in measuring an object.
Fig. 3 is another schematic view showing that a ruler hook of a prior art measure tape in measuring an object.
Fig. 4 is an exploded perspective view of a slide-stop hook head of the measure tape.
Fig. 5 is a schematic perspective view of the measure tape and slide-stop hook head.
Fig. 6 is a cross section view of the hook head.
Fig. 7 is a schematic view showing the hook head. combined to a magnet.
Fig. 8 shows that the hook head is combined with a magnet.
Fig. 9 is a cross section view showing another embodiment of the hook head.
Figs. 10 and 11 are schematic views showing that the hook head is used to measure a wall.
Fig. 12 is a cross section view showing that the hook head of the present invention is extended with a slide-stop piece.
Figs. 13 to 16 are schematic view showing that the hook head of the present invention is used to measure an object by using a slide-stop piece.
Figs. 17 and 18 are cross section views showing another embodiment of the hook head.
Fig. 19 shows another embodiment of the hook head of the present invention.
Fig. 20 shows a further embodiment of the hook head.
Fig. 21 shows a yet embodiment of the hook head.

### Detailed Description of the Preferred Embodiments

The present invention will be described hereinafter.

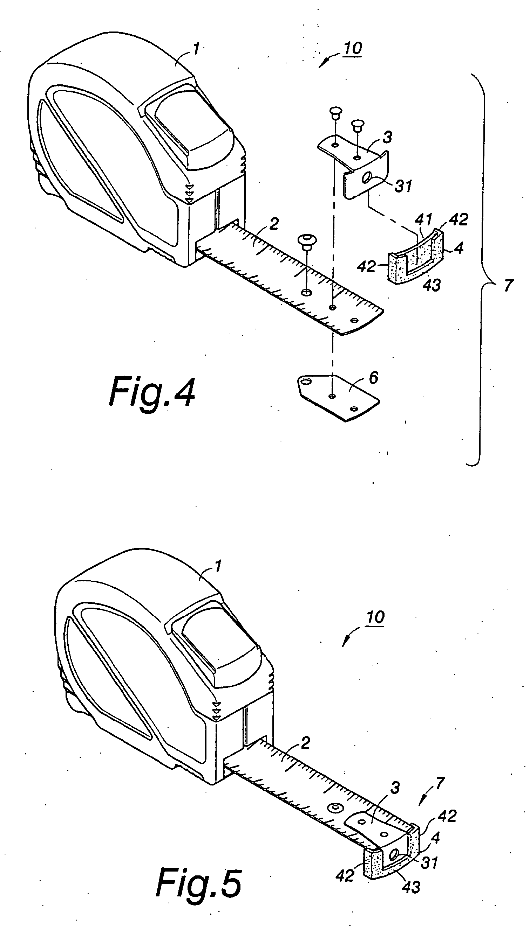

Referring to Fig. 4, the hook head of a measure tape is illustrated. The measure tape 10 has a casing 1. A ruler blade 2 embedded in the casing 1 can be pulled out from the casing 1. A front end of the ruler blade 2 is riveted with a ruler hook 3 having an L shape. To enhance the steadiness of the ruler hook 3, the front end of the ruler blade 2 can be riveted with a pad 6. The feature of the measure tape is that a soft elastomer 4 is combined with the ruler hook 3 to be used as a soft sliding-stop hook head 7, as shown in the Fig. 5.

The soft elastomer 4 may be made of flexible material with lower viscosity. The elastic of the soft elastomer 4 is beneficial for generating an elastic resistance. When the ruler hook 3 is used as an internal structure, the ruler hook 3 can be well adhered to an object to be measured so as to have a preferred slide-stop effect. The material of the soft elastomer 4 can be selected from one of a group containing: PVC, TPR, TPU, TPE, PU. rubbers, silicide, foam, resin or mixing rubbers. The elasticity of the soft elastomer 4 is between 20 and 80 Nt/m. The characteristic of the soft elastomer 4 is soft, and a width of one surface is between 0.1 to 0.5 mm. However, some hardening material or other resins can be added thereto so as to increase the hardness to a desired value.

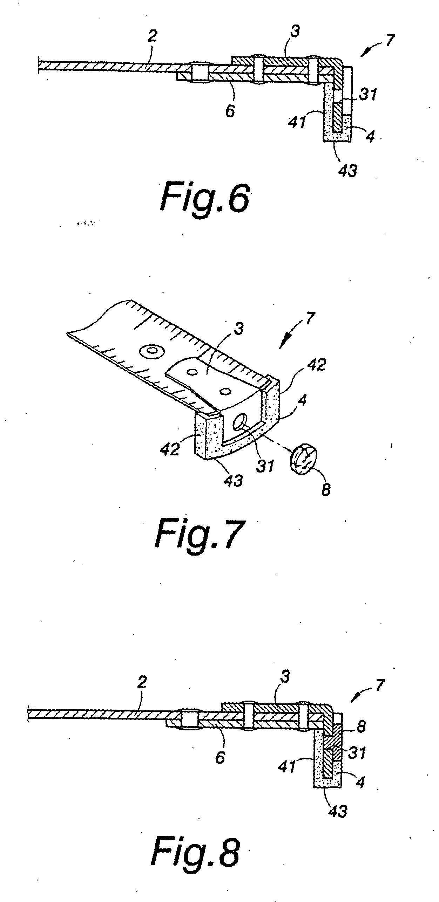

Referring to Fig. 6, a cross section view of the elastic hook head of the ruler of Fig. 5 is illustrated. The soft elastomer 4 is pre-produced as a hook cover. The soft elastomer 4 can be assembled to or detached from the ruler hook 3 as desired. For example, in general, the hook cover is not used, while when the measured bench mark of the object to be measured is oblique, or round cambered or is a ball surface, it is assembled. The soft elastomer 4 can enclose the whole surface of the ruler hook 3. Or, as illustrated in Fig. 6, only the inner lateral surface 41, two lateral frames 42 and bottom frame 43 encloses the ruler hook 3, and only the lower out side is not enclosed because when the ruler hook 3 has a through hole 31. A magnet 8 can be embedded into the through hole 31, as shown in the Fig. 7. The magnet 8 can absorb a metal object to be measured. Moreover, the inner lateral surface 41 of the soft elastomer 4 can be formed with a through hole and then the magnet 8 passes through the through hole 31 so as to contact the object to be measured. Besides, the lower the viscosity of the hook cover, the higher the flexibility. For example the soft elastic hook cover made of silicon rubber or resin, the adhering and slide-stop function can be increased greatly, but the hook head 7 will be adhered with dusts. If too much dusts are adhered on the hook head 7, the hook head 7 can be removed and thus is as a disposable object. This low viscosity hook head 7 is used for a measured bench mark of a large cambered surface or a spherical surface. It can be discarded after measuring.

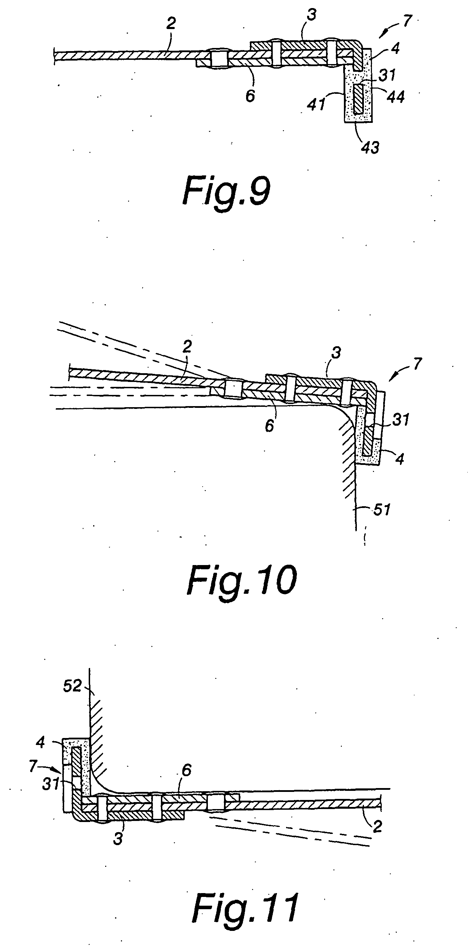

With reference to Fig. 9, the soft elastomer 4 can be formed by molding and then is enclosed within a surface layer of the ruler hook 3, or a melted liquid elastomer encloses the surface of the ruler hook 3 and after cooled, a desired shape is formed, for example, by sinking, coating, spraying, etc. An inner and outer surfaces 41 and 44 of the shaped soft elastomer 4 are combined as an integral body by a through hole 31 or not by any through hole. Besides, the surface of the ruler hook 3 can be injected with hard plastics (for example, ABS), and the surface of the hard plastics is adhered with a layer of the soft elastomer 4.

By the adhering and slide-stopping effect of the soft elastomer 4, the hook head 7 has a preferred hooking ability, as shown in the Fig. 10. When the hook head 7 is hung from a round table edge 51, it can be fixed by the flexibility of the soft extending joints. Moreover, the displacement and release will not be affected by the vibration of the ruler blade 2. This is because of the slide-stop function of the soft elastomer 4 so that it can be steadily adhered to the surface of the table edge. Besides, in measuring, the oblique hook head 7 of ruler blade 2 will not slide or displace, and the angle between the ruler blade 2 and the base surface can be as great as 45 degrees.

Referring to Fig. 11, when the user measures a ceiling, the hook head 7 can be suspended from a cambered measured bench mark (surface) 52, in the process of pulling the ruler blade 2, if it shakes up and down, or leftwards and rightwards, by the adhering and slide-stop effects of the soft elastomer 4, the ruler blade 2 will not separate easily. Otherwise, in measuring as the ruler blade 2 is inclined, the hook head 7 will not slide out or displace. In this case, the angle between the ruler blade 2 and the base surface can be as great as 30 degrees. Moreover, as measuring along a transversal direction or a vertical direction, the angle between the ruler blade 2 and the base surface can be as great as 45 degrees.

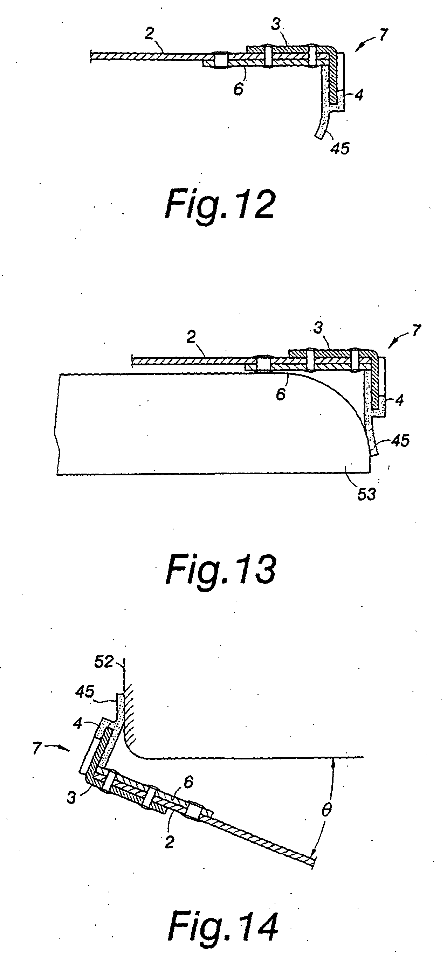

Referring to Fig. 12, to increase the adhering and slide-stop effect of the soft elastomer 4, a lower end of the soft elastomer 4 is extended with a slide-stop piece 45. Preferably, the slide-stop piece 45 shifts inwards with 30 degrees. By the deformation of the slide-stop piece 45, the hook head 7 is easily hung upon a measured object having a larger curvature or a smooth object. Moreover, the measuring space between the ruler blade 2 and the measured bench mark is larger. Referring to Fig. 13, it is illustrated that the hook head 7 is hung upon a measured bench mark 53 of a larger cambered surface. Referring to Fig. 14, the hook head 7 is hung upon the cambered measured bench mark (surface) 52. By the adhering and slide-stop functions of the soft elastomer 4 and the slide-stop piece 45, the hook head 7 is fixed thereon. Otherwise, the ruler blade 2 can downwards or outwards shift with an angle θ (which may be as great as 45 degrees) in measurement. For example, measuring a length of an inclined surface or a length of an inclined side between the first measured bench mark and the second measured bench mark.

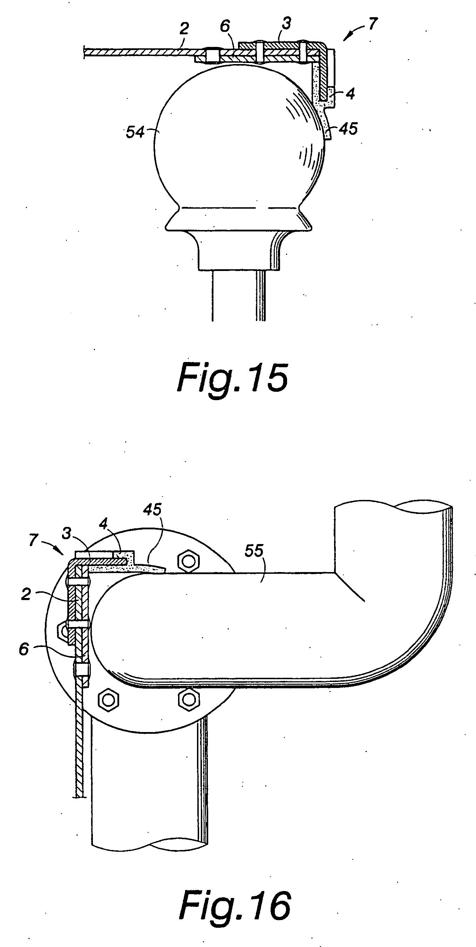

Moreover, referring to Fig. 15, in that, the present invention is used to measure a measured bench mark (surface) of a ball surface 54, and the referring to Fig. 16, in that, the present invention is used to measure a measured bench mark (surface) of a tubular object 55. However, in these cases, the present invention can achieve a preferred effect.

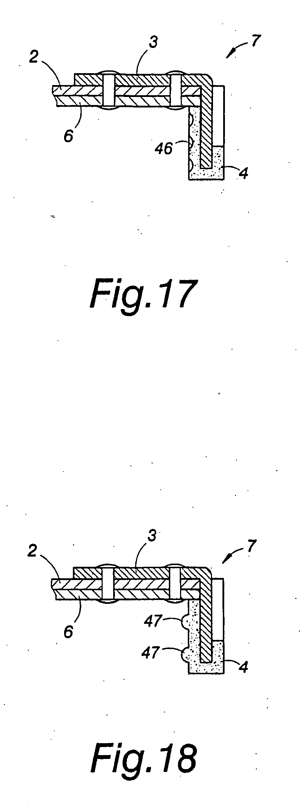

Referring to Figs. 17 and 18, an inner side of the soft elastomer 4 is added with a concave small air chamber 46 or slide-proof particles 47, or slide-proof textures (for example, convex or concave textures) so that a larger absorption effect is generated between the soft elastomer 4 and the measured bench mark of the object to be measured.

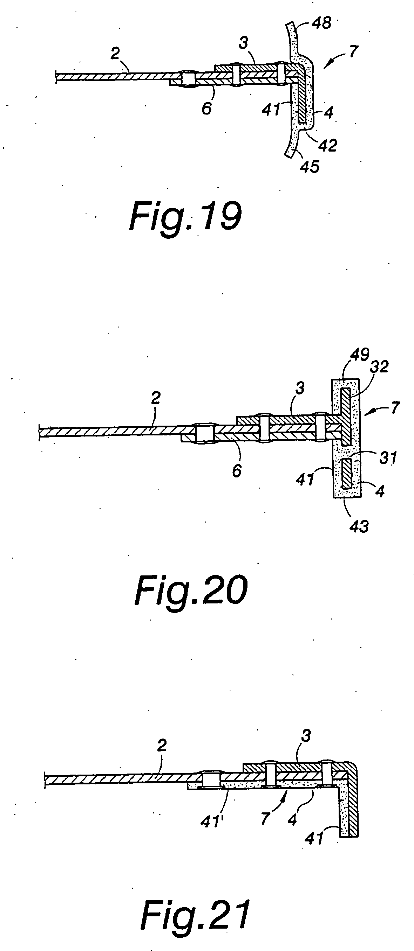

With reference to Fig. 19, an upper end of the soft elastomer 4 is extended with a slide-stop piece 48 which has a function like that of slide-stop piece 45. The slide-stop piece 48 of the hook head 7 is mainly used to hang the measured bench mark of an object at an upper side.

Referring to Fig. 20, when the ruler hook 3 is extended with a stopper 32. A slide-stop cover 49 extends upwards from the soft elastomer 4 for enclosing the stopper 32. Especially, an inner side of the stopper 32 absolutely encloses the ruler hook 3. With reference to Fig. 21, the soft elastomer 4 has a piece form to be adhered to an inner surface of the ruler hook 3. Namely, the soft elastomer 4 only has an inner surface 41 or a further extending surface 41' extending from the inner surface 41 toward a bottom of the ruler blade 2. Thereby, the hook head 7 has the effect of slide-proof.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A soft stop-proof hook head (7) of a measure tape (10), the hook head (7) being located at one outer end of the measure tape (10) and comprising a ruler hook (3), wherein a surface of the ruler hook (3) is enclosed by a soft elastomer (4), the soft elastomer (4) being made of a flexible material, **characterized in that** at least one end of the soft elastomer (4) is extended with a slide-stop piece (45; 48).

2. A soft stop-proof hook head (7) of a measure tape (10) according to claim 1, wherein the ruler hook (3) is L-shaped.

3. A soft stop-proof hook head (7) of a measure tape (10) according to claim 1 or 2, wherein a lower end of the soft elastomer (4) is extended with a slide-stop piece (45).

4. A soft stop-proof hook head (7) of a measure tape (10) according to claim 1 or 2, wherein an upper end of the soft elastomer (4) is extended with a slide-stop piece (48).

5. A soft stop-proof hook head (7) of a measure tape (10) according to any of claims 1 to 4, wherein the slide-stop piece (45; 48) is bent.

## Patentansprüche

1. Weicher rutschfester Hakenkopf (7) eines Maßbandes (10), wobei der Hakenkopf (7) an einem äußeren Ende des Maßbandes (10) angeordnet ist und einen Linealhaken (3) umfasst, wobei eine Oberfläche des Linealhakens (3) von einem weichen Elastomer (4) umschlossen ist, wobei das weiche Elastomer (4) aus einem flexiblen Material hergestellt ist, **dadurch gekennzeichnet, dass** wenigstens ein Ende des weichen Elastomers (4) mit einem Antigleitstück (45; 48) verlängert ist.

2. Weicher rutschfester Hakenkopf (7) eines Maßbandes (10) nach Anspruch 1, wobei der Linealhaken (3) L-förmig ist.

3. Weicher rutschfester Hakenkopf (7) eines Maßbandes (10) nach Anspruch 1 oder 2, wobei ein unteres Ende des weichen Elastomers (4) mit einem Antigleitstück (45) verlängert ist.

4. Weicher rutschfester Hakenkopf (7) eines Maßbandes (10) nach Anspruch 1 oder 2, wobei ein oberes Ende des weichen Elastomers (4) mit einem Antigleitstück (48) verlängert ist.

5. Weicher rutschfester Hakenkopf (7) eines Maßbandes (10) nach einem der Ansprüche 1 bis 4, wobei das Antigleitstück (45; 48) gebogen ist.

## Revendications

1. Tête de crochet anti-arrêt souple (7), d'un ruban à mesurer (10), la tête de crochet étant située au niveau d'une extrémité externe du ruban à mesurer (10) et comprenant un crochet de règle (3), dans lequel une surface du crochet de règle (3) est revêtue d'un élastomère souple (4), l'élastomère souple (4) étant fait d'un matériau flexible, **caractérisée en ce qu'**au moins une extrémité de l'élastomère souple (4) est complétée d'une butée de coulissement (45 ; 48).

2. Tête de crochet anti-arrêt souple (7) d'un ruban à mesurer (10) selon la revendication 1, dans laquelle le crochet de règle (3) est en forme de L.

3. Tête de crochet anti-arrêt souple (7) d'un ruban à mesurer (10) selon la revendication 1 ou 2, dans laquelle une extrémité inférieure de l'élastomère souple (4) est complétée d'une butée de coulissement (45).

4. Tête de crochet anti-arrêt souple (7) d'un ruban à mesurer (10) selon la revendication 1 ou 2, dans laquelle une extrémité supérieure de l'élastomère souple (4) est complétée d'une butée de coulissement (48).

5. Tête de crochet anti-arrêt souple (7) d'un ruban à mesurer (10) selon l'une quelconque des revendications 1 à 4, dans laquelle la butée de coulissement (45 ; 48) est pliée.
